# EUROPEAN PATENT APPLICATION

(11) **EP 4 722 864 A1**
(43) Date of publication of application: **08.04.2026**
(21) Application number: 24818654.6
(22) Date of filing: 04.06.2024
(51) Int. Cl.: G06F 3/01, G06F 3/0481, G06T 19/00

(54) **THREE-DIMENSIONAL SPACE APPLICATION INTERACTION METHOD, DEVICE AND STORAGE MEDIUM**

(30) Priority: 05.06.2023 CN 202310658690
(71) Applicant: Beijing Irisview Technology Co., Ltd., Beijing 100083 (CN)
(72) Inventor: YUE, Yating, Beijing 100083 (CN)
(74) Representative: IP TRUST SERVICES
(86) International application number: PCT/CN2024/097346
(87) International publication number: WO 2024/251122

(57) **Abstract**

The present disclosure relates to the technical field of extended reality interactions, and provides a three-dimensional space application interaction method, a device, and a storage medium. The method comprises: acquiring environmental depth image information of each frame in the three-dimensional space within a user's field of view at preset time intervals; identifying and locating objects in the environmental depth image information of each frame to form an object set; matching the target object provided with an anchor point in the object set according to a preset interaction mapping table, and determining the application bound to the anchor point; and displaying the application bound to the anchor point at a position of the anchor point. Through the embodiments of the present disclosure, the applications can be presented in a manner of dynamically interacting with the extended reality three-dimensional environment and the objects therein, thereby enhancing the immersive experience and the experience of the user when using XR electronic devices such as XR glasses.

## Description

The present disclosure claims the priority of the Chinese patent with an application number of CN202310658690.9, entitled "THREE-DIMENSIONAL SPACE APPLICATION INTERACTION METHOD AND APPARATUS, DEVICE AND STORAGE MEDIUM", and filed on June 5, 2023, the entire content of which is incorporated herein by reference.

### TECHNICAL FIELD

The present disclosure relates to the technical field of extended reality interactions, and particularly to a three-dimensional space application interaction method, a device, and a storage medium.

### BACKGROUND

An existing electronic device such as a mobile phone, a computer, or extended reality (XR) glasses will intuitively present a desktop and an application list after being powered on, allowing users to select the applications they need to use through the desktop and the application list. In a two-dimensional (2D) environment, although the use of the desktop and the application list for application display on many electronic devices is limited by the 2D environment, it also aligns well with the inherent characteristics of the 2D environment, thereby achieving favorable user experience. However, in a three-dimensional (3D) environment, the existing display method for the desktop and the application list is still to set the applications that the user needs to use on a 2D plane. Such a display method has the problems such as large space occupation, obstruction of user's view, and failure to exert the display effect in an XR environment. The display method may also exacerbate the user's sense of vertigo during device operation, and it neither enables an interactive display with the environment nor allows an effective interaction with the user. Therefore, there is an urgent need for 3D space application interaction method, which enables applications to be presented not in the monotonous form of desktop and application list, but in a manner of dynamically interacting with an XR 3D environment and objects therein, thereby enhancing the immersive experience and the experience of the user when using XR electronic devices such as XR glasses.

### SUMMARY

In view of the problems of the current display method for a desktop and an application list, such as large space occupation, obstruction of user's view, and failure to exert the display effect in an extended reality environment, the present solution is proposed to overcome or at least partially solve the aforesaid problems.

In an aspect, an object of some embodiments of the present disclosure is to provide a three-dimensional (3D) space application interaction method, including:
acquiring environmental depth image information of each frame in the 3D space within a user's field of view at preset time intervals;
identifying and locating objects in the environmental depth image information of each frame to form an object set;
matching the target object provided with an anchor point in the object set according to a preset interaction mapping table, and determining the application bound to the anchor point; and
displaying the application bound to the anchor point at a position of the anchor point.

In another aspect, some embodiments of the present disclosure further provide a computer device, including a memory, a processor, and a computer program stored in the memory, wherein when executed by the processor, the computer program performs instructions of the aforesaid method.

In still another aspect, some embodiments of the present disclosure further provide a computer storage medium on which a computer program is stored, wherein when executed by a processor of a computer device, the computer program performs instructions of the aforesaid method.

One or more technical solutions provided by some embodiments of the present disclosure at least have the following technical effects:
The embodiments of the present disclosure automatically acquire environmental depth image information of each frame in the 3D space within a user's field of view at preset time intervals, and obtains an object in a binding relationship with an application within the current user's field of view. In this way, the object in a binding relationship with the application in the current field of view can be updated in real time as the user's field of view changes and/or the object in the user's field of view changes, so as to display the application in the 3D space within the user's field of view. Thus, the applications are presented in a manner of dynamically interacting with the XR 3D environment and the objects therein, thereby enhancing the immersive experience and the experience of the user.

The above description is merely an overview of the technical solutions of some embodiments of the present disclosure. In order to enable a clearer understanding of the technical means of some embodiments of the present disclosure for implementation in accordance with the contents of the disclosure, and in order to make the above and other objects, features, and advantages of some embodiments of the present disclosure more obvious and understandable, the specific implementations of some embodiments of the present disclosure are particularly given below.

### BRIEF DESCRIPTION OF DRAWINGS

In order to explain the technical solutions in some embodiments of the present disclosure or in the prior art more clearly, the drawings required for describing the embodiments or the prior art are briefly introduced below. It is apparent that the drawings involved in the following description merely illustrate some embodiments recited in this disclosure, and those of ordinary skill in the art can derive other drawings therefrom without paying creative efforts. In the drawings:
FIG. 1 illustrates a schematic diagram of an implementation system for a 3D space application interaction method according to some embodiments of the present disclosure;
FIG. 2 illustrates a flowchart of a 3D space application interaction method according to some embodiments of the present disclosure;
FIG. 3 illustrates a 2D schematic diagram of an application list according to some embodiments of the present disclosure;
FIG. 4a illustrates a first schematic diagram of 3D space application interaction according to some embodiments of the present disclosure;
FIG. 4b illustrates a second schematic diagram of 3D space application interaction according to some embodiments of the present disclosure;
FIG. 5 illustrates a schematic diagram of steps for determining a position of an anchor point according to some embodiments of the present disclosure;
FIG. 6a illustrates a first schematic diagram of binding an application to a target object provided with anchor points according to some embodiments of the present disclosure;
FIG. 6b illustrates a second schematic diagram of binding an application to a target object provided with anchor points according to some embodiments of the present disclosure;
FIG. 7 illustrates a third schematic diagram of binding an application to a target object provided with anchor points according to some embodiments of the present disclosure;
FIG. 8 illustrates a fourth schematic diagram of binding an application to a target object provided with anchor points according to some embodiments of the present disclosure;
FIG. 9 illustrates a schematic diagram of steps for displaying an application at an anchor point according to some embodiments of the present disclosure;
FIG. 10a illustrates a first schematic diagram of a size change of a displayed application according to some embodiments of the present disclosure;
FIG. 10b illustrates a second schematic diagram of a size change of a displayed application according to some embodiments of the present disclosure;
FIG. 11 illustrates a schematic diagram of steps for displaying enhanced environmental depth image information according to some embodiments of the present disclosure;
FIG. 12 illustrates a schematic diagram of steps for constructing an interaction mapping table according to some embodiments of the present disclosure;
FIG. 13 illustrates a schematic diagram of binding the selected object to the application to be added according to some embodiments of the present disclosure;
FIG. 14 illustrates a 2D schematic diagram of a lightweight list according to some embodiments of the present disclosure;
FIG. 15 illustrates a 3D schematic diagram of a lightweight list according to some embodiments of the present disclosure;
FIG. 16 illustrates a structural diagram of a 3D space application interaction apparatus according to some embodiments of the present disclosure; and
FIG. 17 illustrates a structural diagram of a computer device provided in some embodiments of the present disclosure.

### [Description of reference signs]

1: 3D space application interaction system; 101: terminal; 102: server; 1601: receiving module; 1602: recognition and locating module; 1603: matching module; 1604: display module; 1702: computer device; 1704: processor; 1706: memory; 1708: drive mechanism; 1710: input/output interface; 1712: input device; 1714: output device; 1716: presentation device; 1718: graphical user interface; 1720: network interface; 1722: communication link; 1724: communication bus.

### DETAILED DESCRIPTION

In order to enable those skilled in the art to better understand the technical solutions in the present disclosure, the technical solutions in the embodiments of the present disclosure will be clearly and completely described below with reference to the drawings for some embodiments of the present disclosure. Obviously, the described embodiments are merely some, rather than all, of the embodiments of the present disclosure. Based on some embodiments in the present disclosure, all other embodiments obtained by those of ordinary skill in the art without creative efforts shall fall within the protection scope of the present disclosure.

It shall be noted that the terms "first", "second", etc. in the specification, the claims and the above drawings of the present disclosure are used to distinguish similar objects and not necessarily to describe a particular order or sequential order. It shall be understood that data thus used can be interchanged under appropriate circumstances so that the embodiments of the present disclosure described here can be implemented in an order other than those illustrated or described here. Furthermore, the terms "include", "comprise", "have" and any variant thereof are intended to cover non-exclusive inclusions. For example, a process, a method, an apparatus, a product or a device each including a series of steps or units, is not necessarily limited to those explicitly listed, but may include other steps or units not explicitly listed or inherent to the process, the method, the product or the device. It shall be noted that acquisition, storage, use, processing and the like of data in the technical solutions of the present disclosure all comply with the relevant provisions of relevant laws and regulations.

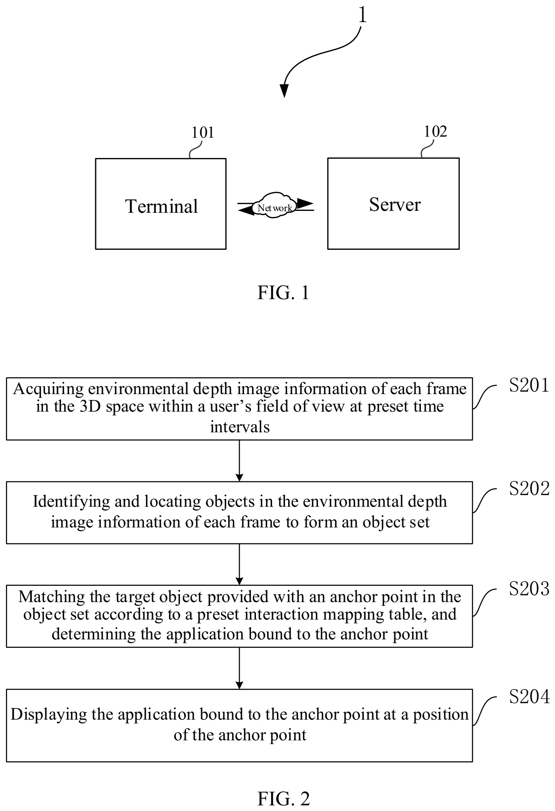

FIG. 1 illustrates a schematic diagram of an implementation system for a three-dimensional (3D) space application interaction method according to an embodiment of the present disclosure, which may include: a terminal 101 and a server 102. The terminal 101 and the server 102 are communicated with each other through a network, which may include a local area network (LAN), a wide area network (WAN), the Internet, or combinations thereof, and is connected to a website, user equipment (e.g., a computing device) and a backend system. After wearing an extended reality (XR) electronic device, a user may send a request for scanning 3D space within a user's field of view to the server 102 through the terminal 101. Upon receiving the request for scanning the 3D space within the user's field of view, the server 102 invokes an interaction mapping table in a database for calculation and processing to obtain a to-be-displayed data processing result, and sends the to-be-displayed data processing result to the terminal 101, so that the terminal deploys applications, which have been added in the 3D space within the user's field of view, in the 3D space according to the to-be-displayed data processing result.

In the embodiments of the present disclosure, the server 102 may be an independent physical server, or a server cluster or distributed system composed of a plurality of physical servers, or a cloud server that provides basic cloud computing services such as cloud services, cloud databases, cloud computing, cloud functions, cloud storage, network services, cloud communications, middleware services, domain name services, security services, content delivery networks (CDNs), as well as big data and artificial intelligence platforms.

In an optional embodiment, the terminal 101 may include, but is not limited to, electronic devices such as a smart wearable device. Of course, the terminal 101 is not limited to the above electronic devices with a physical form, but may also be software running in the above electronic devices.

In addition, it shall be noted that FIG. 1 merely illustrates an application environment provided by the present disclosure, and in practical applications, a plurality of terminals 101 may also be included, which is not limited in the present disclosure.

FIG. 2 illustrates a flowchart of a 3D space application interaction method provided by an embodiment of the present disclosure. The present disclosure provides the operational steps of the method as illustrated in the embodiment or the flowchart, but more or fewer operation steps may be included based on conventional or non-inventive efforts. The sequence of steps listed in the embodiment is merely one of various step execution orders and does not represent the sole execution order. During actual execution by a system or an apparatus product, the steps may be performed sequentially or in parallel in accordance with the method illustrated in the embodiments or the drawings. Specifically, as illustrated in FIG. 2, the method may be performed by the above server 102 and may include.
S201: acquiring environmental depth image information of each frame in the 3D space within a user's field of view at preset time intervals;
S202: identifying and locating objects in the environmental depth image information of each frame to form an object set;
S203: matching the target object provided with an anchor point in the object set according to a preset interaction mapping table, and determining the application bound to the anchor point; and
S204: displaying the application bound to the anchor point at a position of the anchor point.

The embodiments of the present disclosure automatically acquire environmental depth image information of each frame in the 3D space within a user's field of view at preset time intervals, and obtains an object in a binding relationship with an application within the current user's field of view. In this way, the object in a binding relationship with the application in the current field of view can be updated in real time as the user's field of view changes and/or the object in the user's field of view changes, so as to display the application in the 3D space within the user's field of view. Thus, the applications are presented in a manner of dynamically interacting with the XR 3D environment and the objects therein, thereby enhancing the immersive experience and the experience of the user.

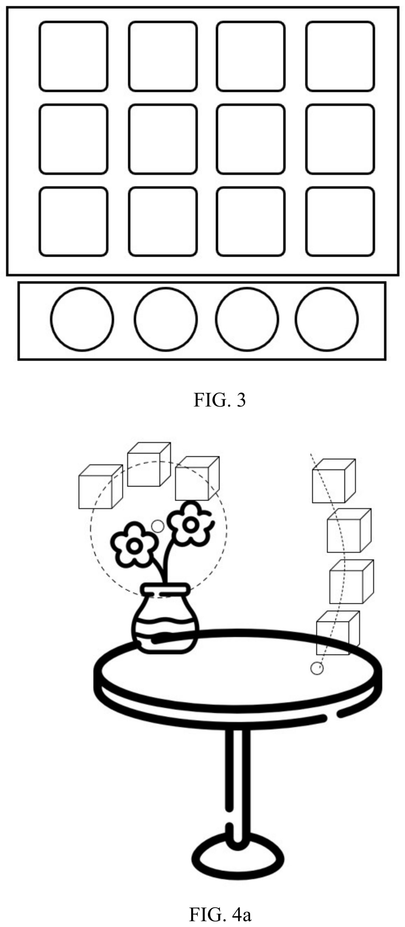

Specifically, in some embodiments, the extended reality (XR) refers to the integration of the real world and the virtual world by a computer to create a human-computer interaction virtual environment, and it is also a general term for various technologies including virtual reality (VR), augmented reality (AR), and mixed reality (MR). In the prior arts including the XR technology, applications are presented to the user on a 2D plane as illustrated in FIG. 3. For example, a desktop application list is directly presented to the user when an existing mobile phone or computer is powered on, and a 2D screen floating in the air is presented to the user in the existing electronic device such as XR glasses. However, for an XR electronic device, the 2D application display method occupies a larger user's field of view, fails to leverage the advantage of XR electronic devices being able to present applications within a three-dimensional environment and cannot realize effective interaction with the 3D space, resulting in poor immersive experience and experience of the user.

In some embodiments, in a case where the user has bound an application to an anchor point of a target object in a 3D environment, when the target object enters the user's field of view, the application bound to the anchor point is displayed to the user. Specifically, scanning at preset time intervals refers to preset a regular scanning frequency for scanning, and the scanning frequency is generally a fixed value but may also be a non-fixed variable value, which is not limited in the present disclosure. The user's field of view may be understood as a 3D space area currently visible to the user, and it changes continuously as the user moves. In some embodiments, it is also possible to monitor whether the user is maintaining in a monocular viewing state; and if so, the user's field of view corresponding to the monocular viewing can also be calculated, thereby displaying the corresponding 3D space interaction application to save the computing resources.

In some embodiments, the environmental depth image information may be understood as a depth image of an environment where the user is located. In addition to the ordinary RGB three-channel color image, an environmental depth image also includes image channel information related to a distance from a viewpoint to the surface of a scene object, and may further include infrared image information, hyperspectral image information and the like in some embodiments. Based on the environmental depth image information of each frame, not only the object in the environmental depth image information can be identified, but also the distance between the object and the user can be determined, so that the object can be identified and located. It shall be noted that the object may include a physical object and a virtual object. In which, the physical object may include a real-world item, a living being, a spatial point, a spatial area, or the like, and can be directly identified and located according to the environmental depth image information. In contrast, a virtual object refers to an object that does not actually exist; it may be an object constructed by means of the VR technology and the position thereof needs to be determined by means of the physical object. The object set refers to a set of objects obtained through recognition and locating and the virtual objects associated therewith. The interaction mapping table stores the target objects which are provided with the anchor points, the applications bound to the anchor points, and the relative position information between the anchor points and the target objects that are corresponding to each other. It can be understood that an application establishes a binding relationship with a target object by being bound to an anchor point. When the application bound to the anchor point is displayed at the position of the anchor point, the application may be displayed in a 2D or 3D form, and may achieve a static or dynamic effect, etc. The present disclosure does not limit the shape and the structure of the application itself.

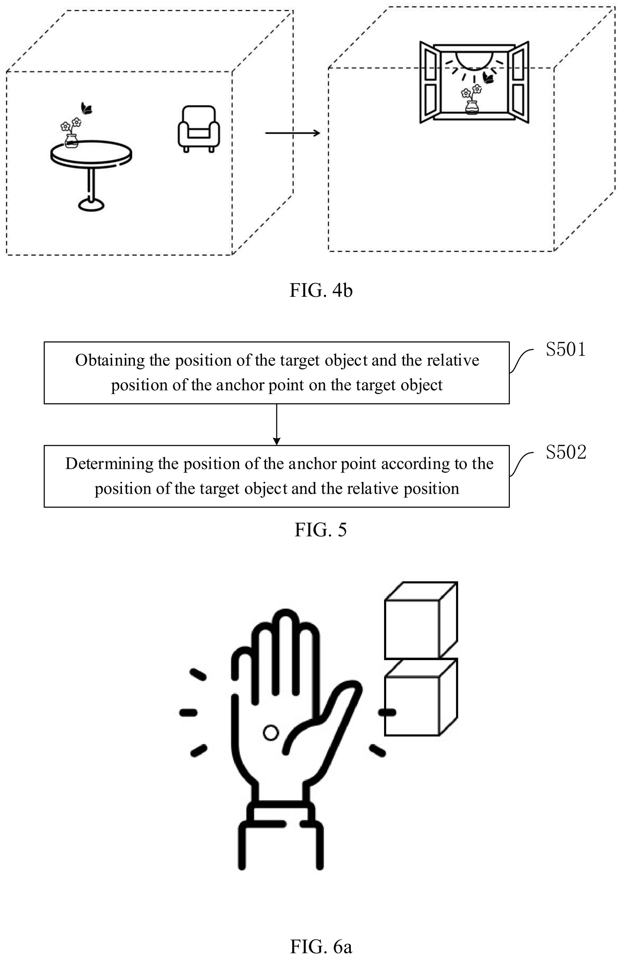

Further, the 3D space application interaction method proposed in the embodiments of the present disclosure takes 3D environmental information around the user as a reference basis for application display, and deeply binds the application to the 3D environment. As illustrated in a schematic diagram of 3D space application interaction in FIG. 4a, the method the environmental depth image information of each frame in the 3D space within the current user's field of view is scanned in real time, and it is determined whether there is a target object in the current environmental depth image information, and which position (i.e., anchor point) on the target object is bound with which applications. Moreover, the applications displayed to the user are continuously refreshed as the user's field of view changes and/or the target object within the user's field of view changes. Referring to FIG. 4b, in some embodiments, the user takes a flowerpot as the target object in advance, designates a point at an upper right corner of the flowerpot as the anchor point, and binds a butterfly-shaped application to the anchor point. When the flowerpot is placed on a table and located within the user's field of view, the user can view the displayed butterfly-shaped application. When the flowerpot is placed on a windowsill and located outside the user's field of view, the butterfly-shaped application will no longer be displayed above the table for the user. When the user's field of view covers the flowerpot on the windowsill, the method can identify the flowerpot as the target object and display the butterfly-shaped application for the user at the anchor point of the flowerpot, thereby improving the user experience.

Referring to FIG. 5, in some embodiments, before displaying the application bound to the anchor point at a position of the anchor point, the method may further include:

S501: obtaining a position of the target object and the relative position of the anchor point on the target object; and

S502: determining the position of the anchor point according to the position of the target object and the relative position.

Specifically, in some embodiments, after the target object is identified and located and the object set is formed, it is necessary to display the application at the position of the anchor point with the anchor point as a medium. Therefore, in addition to acquiring the position of the target object, it is also necessary to acquire the relative position between the target object and its anchor point, thereby calculating the position of the anchor point and thus determining the position for application display. It shall be noted that the representation modes of all positions and positional relationships are not limited in the embodiments of the present disclosure, and the representation modes may include a spatial Cartesian coordinate system, a spherical coordinate system, etc.

In some embodiments, the object set further includes the added applications.

It can be understood that in some embodiments, the user may establish a binding relationship between a virtual object and one or more applications on the virtual object in advance. Specifically, one or more anchor points may be set on the virtual object, and one or more applications may be displayed on one anchor point. In addition to being an environmental object created by means of the VR technology and the like, the virtual object may also be the added applications. The added applications may be understood as an application that has established a binding relationship with an object in the 3D space in advance, thereby enabling the binding of an application to the added applications. This further expands the ways of establishing association relationships between bound applications, in addition to the way of displaying a plurality of applications on the same anchor point, and enriches the modes of application interaction in the 3D space.

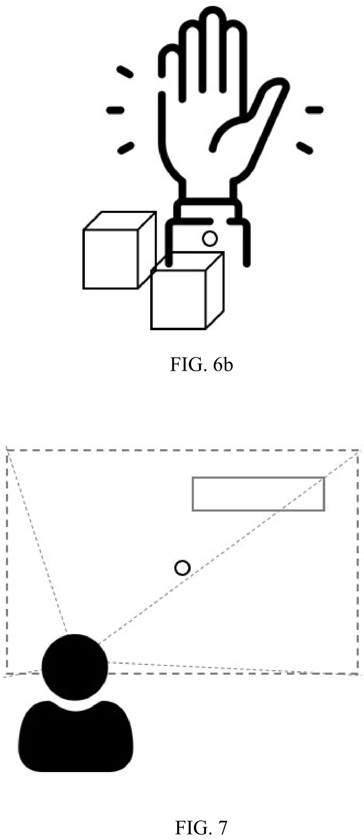

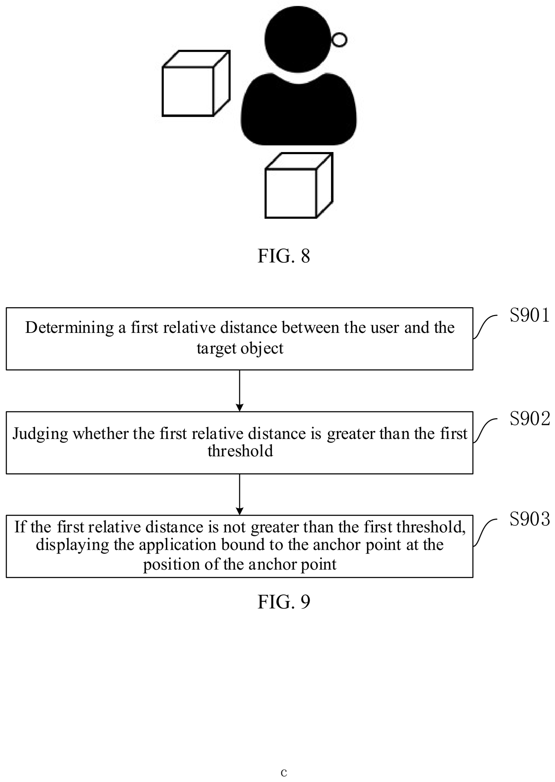

Further, in some typical embodiments, when the user binds the applications in the 3D space in advance, a plurality of target objects may be selected to enhance the interactive experience. The target object may be a special area such as the user's palm or wrist. For example, referring to FIG. 6a, when the palm is used as the target object provided with an anchor point, the application bound to the anchor point may be a memo or the like, which facilitates the user to remind himself of his to-do items, or to prompt key words and key processes during presentations and speeches, etc. Referring to FIG. 6b, when the wrist is used as the target object provided with an anchor point, the application bound to the anchor point may be a sports bracelet, a watch or the like to check the number of exercise steps, check the time, etc. Referring to FIG. 7, the target object may also be a special area such as a fixed area within the user's field of view. For example, when the fixed region within the user's field of view is used as the target object provided with an anchor point, the application bound to the anchor point may be a battery level display application for the currently worn XR electronic device, etc., to enable the user to check the battery level of the currently worn XR electronic device. Referring to FIG. 8, the target object may also be a special area such as a relatively fixed point on the user's head. For example, when the relatively fixed point on the user's head is used as the target object provided with an anchor point, the application bound to the anchor point may be a timer application or the like, to remind the user of a timing duration, thereby enhancing the immersive experience and the experience of the user.

Referring to FIG. 9, in some embodiments, displaying the application bound to the anchor point at the position of the anchor point may include:
S901: determining a first relative distance between the user and the target object;
S902: judging whether the first relative distance is greater than the first threshold; and
S903: if the first relative distance is not greater than the first threshold, displaying the application bound to the anchor point at a position of the anchor point.

It can be understood that in some embodiments, there is an objective relative distance (i.e., the first relative distance) between the user and the target object, which may be calculated based on the environmental depth image information. When the target object is located within the user's field of view, the first relative distance between the user and the target object may be a relatively large value. When the applications bound to an anchor point are to be displayed on the anchor point, selectively filtering the applications can avoid the problem where the displayed applications obscure the physical objects in the 3D space that would occur without such filtering, thereby improving the user experience. Specifically, in some embodiments, only the applications bound to the anchor point for which the first relative distance is not greater than the first threshold may be displayed.

Further, in some embodiments, displaying the application bound to the anchor point at a position of the anchor point may further include: if the first relative distance is greater than the first threshold, hiding the application bound to the anchor point.

Specifically, in some embodiments, although the target object provided with an anchor point can be identified and located, when the first relative distance is greater than the first threshold, one or more applications associated with the target object are hidden to prevent the obstruction of the user's view.

Further, in some embodiments, the size of the displayed application is inversely proportional to the first relative distance.

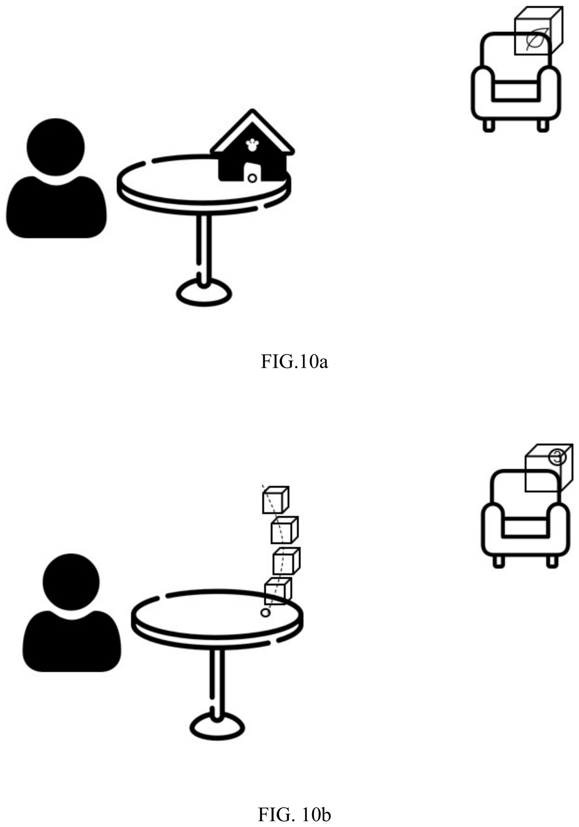

It can be understood that in some embodiments, in addition to the frame size, the size may also include an area or proportion occupied by one or more displayed applications within the user's field of view. As the first relative distance is greater, the user gets farther from the target object and then the size of the displayed application becomes smaller. Conversely, as the first relative distance is smaller, the user gets closer to the target object and then the size of the displayed application becomes larger. Specifically, in some embodiments, as illustrated in FIG. 10a, when a single application is bound to a target object provided with an anchor point, the application bound to a table provided with an anchor point that is closer to the user displays specific content, whereas the application bound to a sofa provided with an anchor point that is further from the user only displays an icon. As illustrated in FIG. 10b, when a plurality of applications are bound to a target object provided with an anchor point, the plurality of applications bound to the table provided with an anchor point that is closer to the user may be expanded to display specific content, whereas the plurality of applications bound to the sofa provided with an anchor point that is further from the user are folded and only a prompt indicating the number of applications is displayed, which enables real-time and dynamic display of the applications at the anchor point based on the distance between the user and the target object provided with an anchor point, thereby further enriching the application interaction modes in the 3D space.

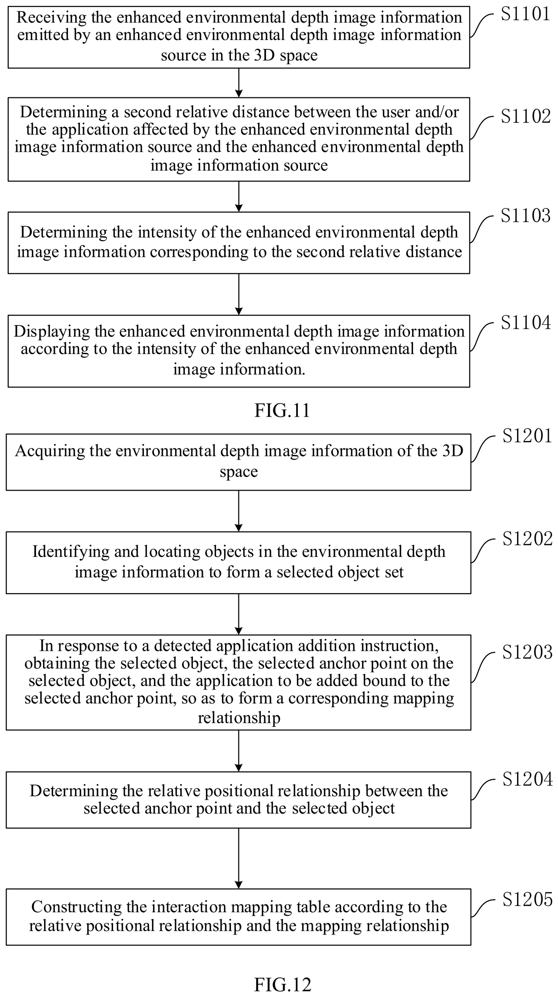

Further, referring to FIG. 11, in some embodiments, the method may further include:
S1101: receiving the enhanced environmental depth image information emitted by an enhanced environmental depth image information source in the 3D space;
S1102: determining a second relative distance between the user and/or the application affected by the enhanced environmental depth image information source and the enhanced environmental depth image information source;
S1103: determining the intensity of the enhanced environmental depth image information corresponding to the second relative distance; and
S1104: displaying the enhanced environmental depth image information according to the intensity of the enhanced environmental depth image information.

It can be understood that in some embodiments, the enhanced environmental depth image information refers to depth image information with enhanced environmental information, wherein the enhanced environmental information may include lighting information, sound information, etc. The intensity of the enhanced environmental depth image information refers to the intensity of the enhanced environmental information, and the enhanced environmental depth image information source refers to an information source that emits the enhanced environmental depth image information. The enhanced environmental information changes with the variation of the second relative distance between the user and/or the application affected by the enhanced environmental depth image information source and the enhanced environmental depth image information source, wherein the application affected by the enhanced environmental depth image information source may be understood as an application having the display effect in correlation with the enhanced environmental depth image information source. The correlation may mean that the enhanced environmental depth image information source exerts an impact on all global applications, or on one or more non-global objects. Specifically, the correlation may be manifested in that as the enhanced environmental information changes, the attributes such as the appearance or sound of the application bound to the corresponding object also change accordingly. That is, the change brought about by the variation of the enhanced environmental information may occur between the applications, or between the application and the user, which is not limited in the present disclosure.

For example, Application A serves as an enhanced environmental depth image information source, which is a desk lamp application with a lighting function activated and is bound to a table provided with an anchor point. Application B is bound to a flowerpot provided with an anchor point. When the user moves the flowerpot, the second relative distance between the user and Application A (the enhanced environmental depth image information source) changes accordingly. Application B bound to the anchor point of the flowerpot may reduce the intensity of the enhanced environmental depth image information as the second relative distance increases, thereby decreasing the display brightness of Application B, or may increase the intensity of the enhanced environmental depth image information as the second relative distance decreases, thereby improving the display brightness of Application B. In this case, the change brought about by the enhanced environmental information acts between the applications. For another example, Application C serves as an enhanced environmental depth image information source, which is an audio application with a playback function activated and is bound to a coffee table provided with an anchor point. As the user moves, the second relative distance between the user and Application C (the enhanced environmental depth image information source) changes accordingly. An XR device worn by the user may decrease the intensity of the enhanced environmental depth image information as the second relative distance increases, thereby lowering the volume of the sound received by the user, or may increase the intensity of the enhanced environmental depth image information as the second relative distance decreases, thereby raising the volume of the sound received by the user. In this case, the change brought about by the enhanced environmental information acts between the application and the user. This enables the added and activated applications in the 3D space to serve as part of the environmental interaction information, thereby further enriching the application interaction modes and enhancing the immersive experience and the experience of the user.

In some embodiments, the enhanced environmental depth image information source is an object bound with an application. Correspondingly, the enhanced environmental information in the enhanced environmental depth image information may also refer to the self-change state of the object, that is, the change brought about by the variation of the enhanced environmental information may occur between the application and the object. For example, Application Y is affected by the enhanced environmental information emitted by Object X, wherein Object X is a transparent water cup filled with water, a water level change in the transparent water cup may be monitored through an image recognition algorithm, and a surface temperature of the transparent water cup may be measured through an infrared temperature measurement algorithm to estimate a water temperature in the transparent water cup. Application Y may display different appearances or add distinctive effects such as sound according to the self-change state of Object X, so that Application Y presents different display states as the self-change state of Object X changes. When the water volume in the transparent water cup decreases, Application Y correspondingly issues a prompt indicating insufficient water volume, and in some embodiments, the user may be further prompted to pay attention to drinking more water. For another example, when the water temperature in the transparent water cup is too high, the application may change the appearance color temperature, for example, turning red to alert the user that the transparent water cup is not suitable for direct contact or that the water in the transparent water cup is not suitable for drinking at present. This enables the enrichment of the application interaction modes according to the self-change state of the object in the 3D environment.

Further, in some embodiments, after displaying the application bound to the anchor point at the position of the anchor point, the method may further include: switching from the current space environment to the target space environment in response to the detected spatial switching operation instruction.

It can be understood that in some embodiments, the spatial switching operation instruction means changing the current space environment to the target space environment. For example, in a case where the current space environment is a mixed real and virtual environment, and the target space environment is a real environment, after the spatial switching operation instruction is triggered, the virtual environment is hidden; meanwhile, the target object provided with an anchor point in the virtual environment disappear from the user's field of view, and the application displayed on the anchor point is hidden accordingly. In some embodiments, the detection of the spatial switching operation instruction may be achieved by monitoring the user's operation state. The user's operation state may include the user's voice command, gesture, posture, action and/or controller operation, etc. That is, the user may trigger the spatial switching operation instruction through a preset voice command, gesture, posture, etc., thereby achieving real-time and accurate switching of the current space environment and updating the applications displayed for the user.

Further in some embodiments, identifying and locating objects in the environmental depth image information of each frame may include: inputting the environmental depth image information of each frame into a preset object detection and recognition algorithm to identify and locate the objects in the environmental depth image information.

It can be understood that in some embodiments, the ordinary RGB three-channel color image or the like in the environmental depth image information within the user's field of view may be used to detect and identify the objects in the 3D space. The image channel information related to the distance from the viewpoint to the surface of the scene object, which is in the environmental depth image information within the user's field of view, may be used to determine the positional relationship between the detected and identified object and the user, thereby accurately identifying and locating the objects in the environmental depth image information using the preset object detection and recognition algorithm.

Referring to FIG. 12, in some embodiments, the interaction mapping table is pre-constructed in the following way:
S1201: acquiring the environmental depth image information of the 3D space;
S1202: identifying and locating objects in the environmental depth image information to form a selected object set;
S1203: in response to a detected application addition instruction, obtaining the selected object, the selected anchor point on the selected object, and the application to be added bound to the selected anchor point, so as to form a corresponding mapping relationship;
S1204: determining the relative positional relationship between the selected anchor point and the selected object; and
S1205: constructing the interaction mapping table according to the relative positional relationship and the mapping relationship.

It can be understood that in some embodiments, when the applications associated with the target object provided with an anchor point in the environmental depth image information of each frame are to be displayed in real time for the user, the prerequisite is that the user has selected an object and an anchor point in the current 3D environment in advance, bound a selected application to be added to the selected anchor point, and saved the selected object, the selected anchor point and the application to be added bound to the selected anchor point, and the relative position information between the selected anchor point and the selected object which are corresponding to each other. Specifically, the objects in the environmental depth image information of the 3D space are identified and located to form a selected object set, wherein the selected object set refers to all objects on which anchor points can be provided. Next, the user's selected object, selected anchor point, and the application to be added bound to the selected anchor point are obtained, and the relative positional relationship between the selected anchor point and the selected object is determined, so as to obtain the relative position information between the selected anchor point and the selected object, thereby constructing an interaction mapping table storing the selected object, the selected anchor point, the application to be added bound to the selected anchor point, and the relative position information between the selected anchor point and the selected object which are corresponding to each other, which enables the applications to be presented in a manner of dynamically interacting with the XR 3D environment and the objects therein.

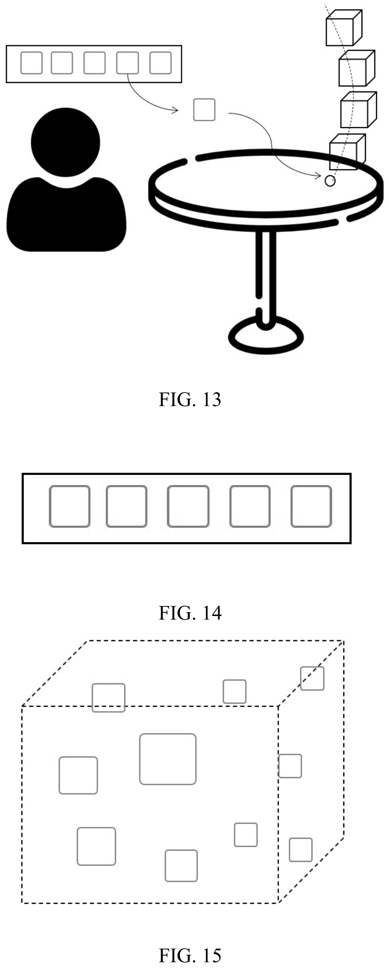

Specifically, in some embodiments, as illustrated in FIG. 13, the user may select and drag the application to be added from a lightweight application list and move it to a position near the selected object. When the currently selected object has been provided with an anchor point and an end position of the dragged application falls within a preset anchor point threshold range, the anchor point may be directly used as the selected anchor point. When the currently selected object is not provided with an anchor point, or the currently selected object has been provided with an anchor point and the end position of the dragged application falls outside the preset anchor point threshold range, a selected anchor point is generated according to the end position of the dragged application. In addition, in some embodiments, when the currently selected object has been provided with an anchor point and the end position of the dragged application falls within the preset anchor point threshold range, the duration for which the dragged application stays at the end position may be used to trigger the generation of a new anchor point, thereby expanding the ways to trigger or generate anchor points.

Further, in some embodiments, the method may further include:
in response to the detected application addition instruction, invoking the application list corresponding to the application addition instruction; and
displaying the application list to the user for the user to select the application to be added.

It can be understood that in some embodiments, the application addition instruction refers to an instruction for adding a new application in the 3D space. The detection of the application addition instruction may be achieved by monitoring the user's operation state. The user's operation state may include the user's voice command, gesture, posture, action and/or controller operation, etc. That is, the user may trigger the application addition instruction through a preset voice command, gesture, posture, etc. The application list may be a lightweight list used to display addable applications to the user. As illustrated in FIG. 14, the lightweight list may be displayed to the user in a 2D form. As illustrated in FIG. 15, the lightweight list may also be displayed to the user in a 3D form to create a staggered spatial effect.

Further, in some embodiments, displaying the application list to the user may further include:
calculating the relevance between the selected object and each application in the application list; and
preferentially displaying the application whose relevance is greater than a second threshold to the user.

It can be understood that in some embodiments, the relevance refers to the degree of association between the selected object and the application in terms of category, function, etc. Specifically, when the relevance is calculated, the textual data of the selected object and the application regarding their categories, functions, etc., may be retrieved, and a semantic similarity between the textual data of the selected object and the application may be calculated, and the semantic similarity is used as the relevance. When the lightweight application list is displayed to the user, displaying the application with high relevance helps the user to quickly select the application to be added. For example, when the selected object is an umbrella, a weather application has a higher relevance to the umbrella than a timer application, and in this case, the weather application is preferentially displayed to the user in the lightweight application list.

It shall be noted that although the operations of the method of the present disclosure have been described in a specific order in the embodiments and the drawings, this does not require or imply that these operations must be performed in this specific order, or that all the operations illustrated must be performed to achieve the desired results. Additionally or alternatively, certain steps may be omitted, multiple steps may be combined into a single step for execution, and/or a single step may be decomposed into multiple steps for execution.

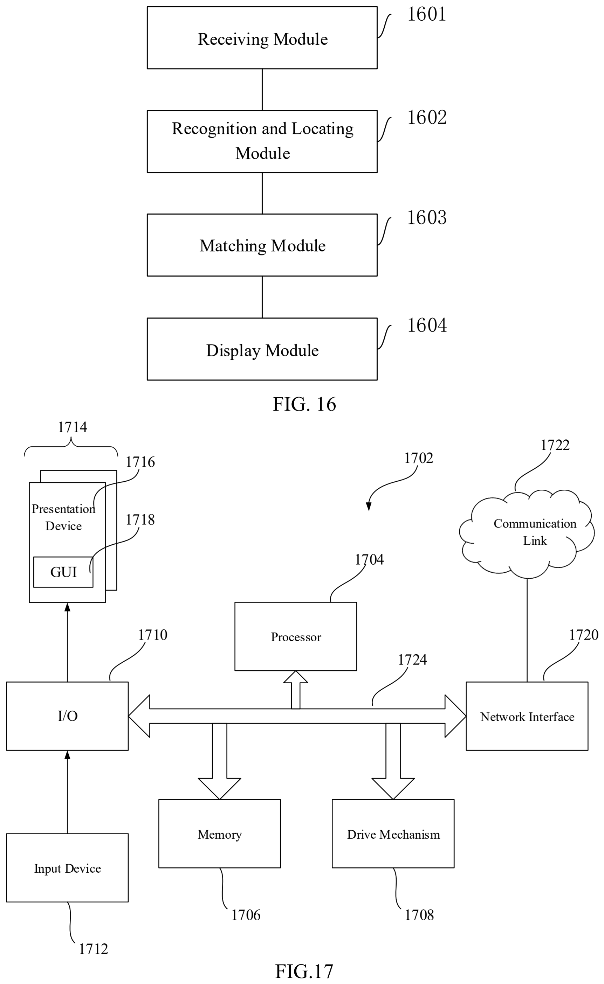

In correspondence with the above 3D space application interaction method, some embodiments of the present disclosure further provide a 3D space application interaction apparatus. As illustrated in FIG. 16, in some embodiments, the apparatus may include:
a receiving module 1601 configured to acquire environmental depth image information of each frame in the 3D space within a user's field of view at preset time intervals;
a recognition and locating module 1602 configured to identify and locate objects in the environmental depth image information of each frame to form an object set;
a matching module 1603 configured to match the target object provided with an anchor point in the object set according to a preset interaction mapping table, and determine the application bound to the anchor point; and
a display module 1604 configured to display the application bound to the anchor point at a position of the anchor point.

For the convenience of description, the apparatus is described by being divided into various units based on its functions and described respectively. Of course, the functions of the various unit may be realized in the same one or more software and/or hardware when the present disclosure is implemented.

It shall be noted that the user information (including but not limited to user equipment information, user personal information, etc.) and data (including but not limited to data for analysis, stored data, displayed data, etc.) involved in the embodiments of the present disclosure are all information and data authorized by the user and fully authorized by all parties.

The embodiments of the present disclosure further provide a computer device. As illustrated in FIG. 17, in some embodiments of the present disclosure, the computer device 1702 may include one or more processors 1704, such as one or more central processing units (CPUs) or graphics processors (GPUs), and each processing unit may implement one or more hardware threads. The computer device 1702 may further include any memory 1706 configured to store any type of information such as codes, settings, data, etc. In a specific embodiment, a computer program is stored in the memory 1706 and executable on the processor 1704, and when being executed by the processor 1704, the computer program may execute the instructions of the method described in any of the above embodiments. Without limitation, for example, the memory 1706 may include any one or combinations of any type of Random-access Memory (RAM), any type of Read-Only Memory (ROM), a flash memory device, a hard disk, an optical disk, etc. More generally, any memory may use any technology to store information. Further, any memory may provide a volatile or nonvolatile retention of information. Further, any memory may represent a fixed or removable component of the computer device 1702. In a case where the processor 1704 executes associated instructions stored in any memory or combination of memories, the computer device 1702 may perform any operation of the associated instructions. The computer device 1702 further includes one or more drive mechanisms 1708 (e.g., a hard disk drive mechanism, an optical disk drive mechanism, etc.) interacted with any memory.

The computer device 1702 may further include an input/output (I/O) interface 1710 configured to receive various inputs (via an input device 1712) and to provide various outputs (via an output device 1714). A specific output mechanism may include a presentation device 1716 and an associated graphical user interface (GUI) 1718. In other embodiments, the input/output (I/O) interface 1710, the input device 1712, and the output device 1714 may not be included, and the device is only used as a computer device in the network. The computer device 1702 may further include one or more network interfaces 1720 configured to exchange data with other devices via one or more communication links 1722. One or more communication buses 1724 couple the components described above together.

The communication link 1722 may be implemented in any manner, for example, by a local area network, a wide area network (e.g., the Internet), a point-to-point connection, etc., or any combination thereof. The communication link 1722 may include any combination of a hardwired link, a wireless link, a router, a gateway function, a name server, etc. governed by any protocol or combination of protocols.

The present disclosure is described with reference to a flowchart and/or block diagram of a method, a device (system), a computer-readable storage medium and a computer program product according to the embodiments of the present disclosure. It shall be understood that each flow and/or block in the flowchart and/or block diagram and combinations thereof can be realized by the computer program instructions. These computer program instructions can be provided to a processor of a general computer, a dedicated computer, an embedded processor or other programmable data processor to produce a machine, such that the instructions performed by the processor of the computer or other programmable data processors generate the apparatus for implementing the function specified in one flow or a plurality of flows in the flowchart and/or a block or a plurality of blocks in the block diagram.

These computer program instructions may also be stored in a computer readable memory capable of directing the computer or other programmable data processors to operate in a specific manner, such that the instructions stored in the computer readable memory generate a manufactured article including an instruction device that implements the function(s) designated in one flow or a plurality of flows in the flowchart and/or a block or a plurality of blocks in the block diagram.

These computer program instructions may also be loaded onto a computer or other programmable data processors, such that a series of operation steps is executed on the computer or other programmable devices to generate the processing realized by the computer, therefore the instructions executed on the computer or other programmable devices provide the steps for implementing the function specified in one flow or a plurality of flows in the flow chart and/or a block or a plurality of blocks in the block diagram.

In a typical configuration, the computing device comprises one or more processors (CPUs), an input/output interface, a network interface and a memory.

The memory may have the form of a volatile memory, a Random-Access Memory (RAM) and/or a nonvolatile memory such as Read-Only Memory (ROM) or a flash RAM, etc. among the computer readable medium. The memory is an example of the computer readable medium.

The computer-readable medium includes permanent and non-permanent, removable and non-removable media, which can realize the information storage in any method or technique. The information can be computer readable instructions, data structures, program modules or other data. An example of the computer storage medium includes, but not limited to, a Phase-Change Random-access Memory (PRAM), a static random access memory (SRAM), a dynamic random access memory (DRAM), other types of random access memory (RAM), a read-only memory (ROM), an electrically-erasable programmable read-only memory (EEPROM), a flash memory or other memory techniques, a compact disk read only memory (CD-ROM), a digital versatile disc (DVD) or other optical storages, magnetic cassette tapes, magnetic diskettes or other magnetic storage device or any other non-transmission medium, which can be used for the storage of information accessible to a computing device. According to the definitions herein, the computer readable medium does not include transitory media, such as modulated data signal and carrier wave.

Those skilled in the art shall appreciate that any embodiment of the present disclosure can be provided as a method, a system or a computer program product. Therefore, the embodiments of the present disclosure can take the form of full hardware embodiments, full software embodiments, or embodiments combining software and hardware. Moreover, the embodiments of the present disclosure can take the form of a computer program product implemented on one or more computer usable storage mediums (including, but not limited to, a magnetic disc memory, CD-ROM, optical storage, etc.) containing therein computer usable program codes.

The embodiments of the present disclosure may be described in the general context of computer executable instructions executed by the computer, e.g., the program module. In general, the program module includes routine, program, object, component, data structure, etc. executing a particular task or realizing a particular abstract data type. The embodiments of the present disclosure may also be put into practice in the distributed computing environments where tasks are executed by remote processors connected through a communication network. In the distributed computing environments, the program modules may be located in the local and remote computer storage medium including the storage device.

It shall also be understood that in the embodiments of the present disclosure, the term "and/or" is only an association relationship that describes the associated objects, indicating that there may be three relationships. For example, A and/or B may mean that A exists alone, A and B both exist, and B exists alone. In addition, the character "/" in the present disclosure generally indicates that the associated objects preceding and following it are in an "or" relationship.

The respective embodiments in the present disclosure are all described in a progressive manner, and the same or similar portions of the respective embodiments can refer to each other. Each embodiment lays an emphasis on its distinctions from other embodiments. In particular, the system embodiment is simply described since it is substantially similar to the method embodiment, and please refer to the descriptions of the method embodiment for the relevant portions.

In the descriptions of the present disclosure, the description of the reference terms "an embodiment", "some embodiments", "an example", "a specific example" or "some examples", etc. mean that the specific features, structures, materials, or characteristics described in conjunction with the embodiment(s) or example(s) are included in at least one embodiment or example of the present disclosure. In the present disclosure, the schematic expressions of the above terms do not necessarily aim at the same embodiment or example. Moreover, the described specific features, structures, materials, or characteristics may be combined in any one or more embodiments or examples in a suitable manner. In addition, those skilled in the art can combine different embodiments or examples described in the present disclosure and features thereof if there is no contradiction to each other.

Those described above are just embodiments of the present disclosure, and are not used to limit the present disclosure. For those skilled in the art, various modifications and variations of the present disclosure are possible. Any modification, equivalent substitution, improvement, etc. made within the spirit and principle of the present disclosure shall be included within the scope of the claims of the present disclosure.

## Claims

1. A three-dimensional space application interaction method, comprising:
acquiring environmental depth image information of each frame in the three-dimensional space within a user's field of view at preset time intervals;
identifying and locating objects in the environmental depth image information of each frame to form an object set;
matching the target object provided with an anchor point in the object set according to a preset interaction mapping table, and determining the application bound to the anchor point;
displaying the application bound to the anchor point at a position of the anchor point.

2. The method according to claim 1, wherein before displaying the application bound to the anchor point at a position of the anchor point, the method further comprises:
obtaining the position of the target object and the relative position of the anchor point on the target object;
determining the position of the anchor point according to the position of the target object and the relative position.

3. The method according to claim 1, wherein the object set further comprises the added applications.

4. The method according to claim 1, wherein displaying the application bound to the anchor point at the position of the anchor point comprises:
determining a first relative distance between the user and the target object;
judging whether the first relative distance is greater than the first threshold;
if the first relative distance is not greater than the first threshold, displaying the application bound to the anchor point at the position of the anchor point.

5. The method according to claim 4, wherein displaying the application bound to the anchor point at the position of the anchor point further comprises:
if the first relative distance is greater than the first threshold, hiding the application bound to the anchor point.

6. The method according to claim 5, wherein the size of the displayed application is inversely proportional to the first relative distance.

7. The method according to claim 1, further comprising:
receiving the enhanced environmental depth image information emitted by an enhanced environmental depth image information source in the three-dimensional space;
determining a second relative distance between the user and/or the application affected by the enhanced environmental depth image information source and the enhanced environmental depth image information source;
determining the intensity of the enhanced environmental depth image information corresponding to the second relative distance;
displaying the enhanced environmental depth image information according to the intensity of the enhanced environmental depth image information.

8. The method according to claim 1, wherein after displaying the application bound to the anchor point at the position of the anchor point, the method further comprises: switching from the current space environment to the target space environment in response to the detected spatial switching operation instruction.

9. The method according to claim 2, wherein identifying and locating objects in the environmental depth image information of each frame comprises: inputting the environmental depth image information of each frame into a preset object detection and recognition algorithm to identify and locate the objects in the environmental depth image information.

10. The method according to claim 2, wherein the interaction mapping table is pre-constructed in the following way:
acquiring the environmental depth image information of the three-dimensional space;
identifying and locating objects in the environmental depth image information to form a selected object set;
in response to a detected application addition instruction, obtaining the selected object, the selected anchor point on the selected object, and the application to be added bound to the selected anchor point, so as to form a corresponding mapping relationship;
determining the relative positional relationship between the selected anchor point and the selected object;
constructing the interaction mapping table according to the relative positional relationship and the mapping relationship.

11. The method according to claim 10, further comprising:
in response to the detected application addition instruction, invoking the application list corresponding to the application addition instruction;
displaying the application list to the user for the user to select the application to be added.

12. The method according to claim 11, wherein displaying the application list to the user further comprises:
calculating the relevance between the selected object and each application in the application list;
preferentially displaying the application whose relevance is greater than a second threshold to the user.

13. A computer device, comprising a memory, a processor, and a computer program stored in the memory, wherein when executed by the processor, the computer program performs instructions of the method according to any one of claims 1 to 12.

14. A computer storage medium on which a computer program is stored, wherein when executed by a processor of a computer device, the computer program performs instructions of the method according to any one of claims 1 to 12.
